# EUROPÄISCHE PATENTSCHRIFT

(11) **EP 1 557 325 B1**
(45) Veröffentlichungstag und Bekanntmachung des Hinweises auf die Patenterteilung: **21.04.2010**
(21) Anmeldenummer: 05000769.9
(22) Anmeldetag: 15.01.2005
(51) Int. Cl.: B60R 21/34, B62D 25/10

(54) **Fahrzeugkarosserieteil mit Zustandsänderung für Fussgängerschutz**
Vehicle body component with change of state for pedestrian protection.
Elément de carrosserie de véhicule à changement d'état pour la protection des piétons.

(30) Priorität: 20.01.2004 DE 102004002820
(43) Veröffentlichungstag der Anmeldung: 27.07.2005
(73) Patentinhaber: GM Global Technology Operations, Inc., Detroit, MI 48265-3000 (US)
(72) Erfinder: Lassota, Andreas, Dr., 55437 Ockenheim (DE)
(74) Vertreter: Strauss, Peter

(56) Entgegenhaltungen:
- EP-A- 1 022 199
- WO-A-02/34578
- DE-A1- 10 136 898
- DE-A1- 10 223 861
- GB-A- 2 341 147

## Beschreibung

Die Erfindung bezieht sich auf ein Fahrzeugkarosserieteil, insbesondere Motorhaube, Kotflügel oder Schürze im Frontbereich eines Fahrzeuges.

Durch zahlreiche Bemühungen hinsichtlich der Konstruktion der tragenden Elemente einer Fahrzeugkarosserie konnte die passive Sicherheit der Fahrzeuginsassen deutlich verbessert werden. Das Augenmerk richtet sich nun auf die Verbesserung der Situation von Fußgängern, die von einem Fahrzeug erfasst werden. Bei einem solchen Aufprall wird der Fußgänger typischerweise auf die Motorhaube geschleudert und durch die dabei auftretenden erheblichen Aufprallkräfte am Körper und am Kopf stark verletzt.

Es ist zwar schon daran gedacht worden, die im Aufprallbereich des Fußgängers liegenden Karosserieteile, also insbesondere Motorhaube, Kotflügel und Schürze des Fahrzeuges, weich auszugestalten, so dass die auf den Fußgänger wirkenden Aufprallkräfte in einem erträglichen Maß gehalten werden können. Die Dokumente EP 1022199 und WO 02/34578 offenbaren Karosserieteile, die auf Fußgänger wirkenden Aufprallkräfte reduzieren. Nachteilig dabei ist, dass die Steifigkeit der Fahrzeugfront insgesamt darunter leidet und es außerdem zu Verformungen der Karosserieaußenhaut kommen kann, wenn Personen sich dort anlehnen, abstützen oder hinsetzen.

Es ist auch schon daran gedacht worden, die Motorhaube bei der drohenden Gefahr eines Fußgängeraufpralles keilförmig aufzustellen, so dass die Motorhaube den Fußgänger quasi auffängt und die Stoßenergie durch die nachgiebigen Stellmittel, die zuvor die Haube aufgestellt haben, abgefangen wird, wodurch die Aufprallkräfte deutlich verkleinert werden. Solche Anordnungen sind allerdings sehr aufwändig.

Die Erfindung beruht somit auf dem Problem, ein Fahrzeugkarosserieteil zu schaffen, das einerseits eine ausreichende Stabilität und Steifigkeit aufweist, andererseits aber genügend weich ist, damit die auf einen von einem Fahrzeug erfassten Fußgänger wirkenden Aufprallkräfte keine schweren Verletzungen hervorrufen.

Zur Lösung des Problems sieht die Erfindung vor, dass das Fahrzeugkarosserieteil aus einer Matte aus einzelnen zusammenhängenden weichverformbaren Elementen besteht, die zur Bildung einer stabilen Einheit einen Verbund bilden, wobei die Verbindung der einzelnen Elemente Sollbruchstellen sind, die bei einer stoßartigen Belastung brechen, mit der Folge, dass der Verbund aufgelöst ist.

Ein solcher Verbund kann als ein zerlegbares Material bezeichnet werden. Bei Normalbelastungen, also bei nicht stoßartigen Belastungen, halten die Sollbruchstellen, so dass der Verbund insgesamt eine stabile Einheit bildet und sich kein Unterschied zu einer normalen Motorhaube oder einem Fahrzeugkarosserieteil ergibt. Beim Aufschlag eines Körpers ergeben sich zunächst stoßartige Kraftspitzen, die die Sollbruchstellen aufbrechen, so dass anschließend der Widerstand nur von den nun vereinzelten weichverformbaren Elementen herrührt, und somit eine weichverformbare Matte vorliegt, die den Fußgänger auffängt, wobei die auftretenden Aufprallkräfte im erträglichen Maße bleiben. Eine kurzfristige Kraftspitze, die benötigt wird, um die Sollbruchstellen aufzubrechen, kann hingenommen werden, da diese vom Körper aufgenommen werden können, ohne dass dies zu schweren Verletzungen führt. So werden z. B. die erträglichen Kopfbelastungen mit dem Head Injury Criterion (HIC) gemessen, dem im Prinzip ein Produkt aus Kraft und Einwirkzeit zu Grunde liegt. Je kürzer die Einwirkzeit ist, desto größer darf die in diesem Zeitraum wirkende Krafteinwirkung sein, ohne dass Kopfverletzungen zu erwarten sind.

Bei den Einzelelementen kann es sich um unter Belastung zusammendrückbare Hohlkörper handeln, die einen runden, quadratischen oder wabenförmigen Querschnitt aufweisen. Eine andere Möglichkeit sieht vor, die einzelnen Elemente aus einem Granulat- oder Sinterwerkstoff zu erstellen, der in sich weich ist.

Diese einzelnen, weichverformbaren Elemente werden zu einem stabilen Verbund zusammengefügt, wobei durch den Bruch der Verbindung, ausgelöst durch einen impulsartigen Stoß, eine insgesamt weichverformbare Matte entsteht. Damit in diesem Zustand die einzelnen Elemente weiterhin zusammenhängen, ist die Matte vorzugsweise von einer, wenn nicht von beiden Seiten mit einer Folie kaschiert. Dies ergibt eine plane Oberfläche, die ebenso wie eine Blechoberhaut lackiert werden kann. Außerdem verhindert die Folienkaschierung, dass die einzelnen Segmente, die möglicherweise scharfe Kanten bilden, eine Verletzung des Fußgängers hervorrufen.

Bei den weichverformbaren Elementen aus einem Granulat- oder Sinterwerkstoff wird deren Elastizität durch die Elastizität des Werkstoffs selbst bestimmt. Bei den unter Belastung zusammendrückbaren Hohlkörpern ergibt sich die Elastizität aus der Geometrie des Hohlkörpers.

Eine derart gestaltete Motorhaube kann auch eingesetzt werden, wenn diese dazu eingerichtet ist, um bei einem drohenden Fußgängeraufprall aufgestellt zu werden. Dabei ergibt sich der weitere Vorteil, dass der bei dieser Art von Fußgängerschutz auftretende Effekt, dass nämlich die hintere Kante der Motorhaube in die Frontscheibe hineingeschoben wird, nicht mehr von Relevanz ist, da auch der Kantenbereich durch den Aufprall in den weichen Zustand versetzt wird und somit nicht in der Lage ist, die Frontscheibe zu durchdringen, was mit nachteiligen Folgen für die Fahrzeuginsassen verbunden wäre.

Ein weiteres Einsatzgebiet eines derartigen Fahrzeugkarosserieteils besteht darin, dass die Matte, die dieses Teil bildet, im Grundsatz eine konkave Form hat, die aber auf ein Untergestell in eine flache oder sogar konvexe Form verspannt wird. Bei einem Aufprall lösen sich die Verbindungen zum Untergestell, so dass die Matte ihre ursprüngliche konkave Form einnimmt und damit eine Auffangform für den Fußgänger bildet, der dadurch noch besser vor Verletzungen geschützt ist.

Ein drittes Einsatzgebiet eines derartigen Fahrzeugkarosserieteiles besteht in der Geräuschisolation, die einem solchen Hohlkammermaterial system-inhärent ist. Hierbei erfolgt die Struktursteifigkeit und die Geräuschisolierung durch ein Bauteil, im Gegensatz zu herkömmlichen Motorhauben, die aus Blechstruktur-Bauteil und Geräusch-Isolations-Bauteil bestehen.

Im Folgenden soll anhand dreier Skizzen die Erfindung näher erläutert werden. Dazu zeigt
- Fig. 1: ein Kraftfahrzeug mit einer erfindungsgemäßen Motorhaube;
- Fig. 2: die Front des Fahrzeuges im Längsschnitt bei einem Fußgängeraufprall;
- Fig. 3: eine Skizze zur Erläuterung der Verspannung eines erfindungsgemäßen Karosserieteiles.

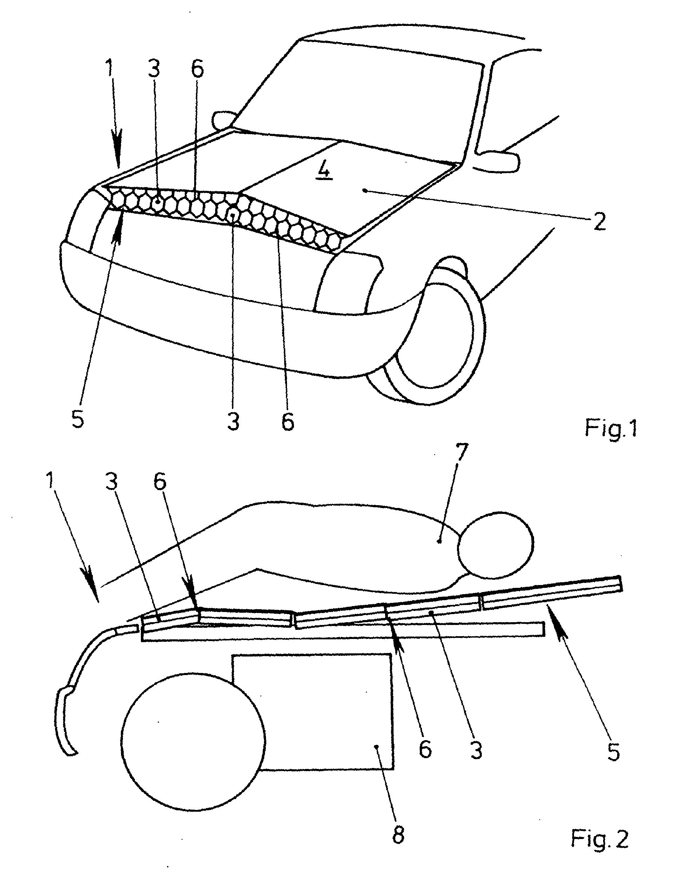

Zunächst wird auf die Figur 1 Bezug genommen. Das Fahrzeug 1 weist eine Motorhaube 2 auf, die aus wabenförmigen weichverformbaren Elementen 3 besteht, die in zwei oder auch mehr Lagen angeordnet sind und mit einer oberen Folie 4 und ggf. mit einer hier nicht näher dargestellten unteren Folie kaschiert eine Matte 5 bilden. Die nach außen gerichtete Außenhaut der Folie 4 entspricht der üblichen Form einer Motorhaube, so dass die Optik des Fahrzeuges sich nicht von einer üblichen unterscheidet.

Die einzelnen Elemente 3 sind hier als Hohlkörper dargestellt, die auf Grund ihrer Geometrie weichverformbar sind. Sie sind über eine Vielzahl von Sollbruchstellen 6 miteinander zu einem Verbund zusammmengefügt. Erst durch den Verbund ergibt sich ein starres Gebilde, das wie eine übliche Motorhaube in der Lage ist, Normalkräften, wie sie zum Beispiel entstehen, wenn eine Person sich auf der Motorhaube abstützt, zu widerstehen.

Bei einem Aufprall eines Fußgängers 7, wie dies in der Figur 2 angedeutet ist, brechen die Sollbruchstellen 6 zwischen den weichverformbaren Elementen 3, so dass diese vereinzelt werden. Die Sollbruchstellen 6 können sich dabei sowohl in Längsrichtung als auch in Querrichtung des Fahrzeuges 1 erstrecken. Nach dem Aufbrechen der Sollbruchstellen 6 werden die weichverformbaren Elemente nur noch durch die Kaschierung zusammengehalten, so dass eine Matte 5 mit einer äußeren Umhüllung entsteht, die mit weichverformbaren Elementen 3 gefüllt ist. Auf dieser Matte 5 liegend stützt sich der Körper und der Kopf des Fußgängers 7 am Motor 8 und den weiteren Teilen im Motorraum ab. Die Aufprallenergien werden dabei von den weichverformbaren Elementen 3 aufgenommen, indem diese zusammengedrückt werden.

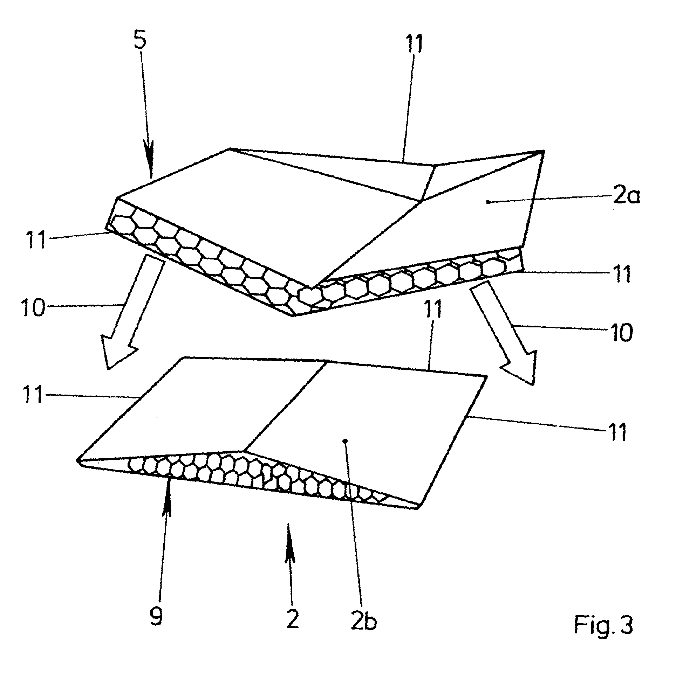

Figur 3 ermöglicht eine weitere Verbesserung dieses Prinzips. Dazu besteht die Motorhaube 2 aus zwei Teilen 2a , 2b. Das eine Teil 2a ist eine Matte 5, die wie oben erläutert ausgebildet ist, allerdings aufgrund der Art der Zusammenfügung der einzelnen Elemente eine konkave bis rinnenförmige Form hat. Darunter befindet sich das zweite 2b in Form eines Untergestelles 9, das ebenfalls als Matte gemäß der Erfindung ausgebildet ist. Die beiden Teile 2a, 2b sind zusammengeführt, wobei die obere Matte 5 entsprechend den Pfeilen 10 aufgebogen und auf dem Untergestell 9 entlang der gemeinsamen Kante 11 befestigt ist. Die Befestigungen sind ebenfalls Sollbruchstellen, die beim Aufprall eines Fußgängers 7 durch die in die Karosserie eingeleiteten Erschütterungen aufbrechen, so dass die obere Matte 5 in die dargestellte Form zurückschnappt und den Körper des Fußgängers 7 in einen mittleren Bereich leitet, in der das Untergestell 9 besonders dick ausgebildet ist. Anschließend brechen die Sollbruchstellen 6 des Verbundes, so dass eine weichverformbare Doppel-Matte entsteht, von der der Körper wie oben beschrieben aufgefangen wird.

### Bezugszeichenliste

- 1: Fahrzeug .
- 2: Motorhaube
- 2a, 2b: Teile der Motorhaube
- 3: weichverformbare Elemente
- 4: Folie
- 5: Matte

- 6: Sollbruchstellen
- 7: Fußgänger
- 8: Motor
- 9: Untergestell
- 10: Pfeil

- 11: Sollbruchstellen
- 12: Rand

## Patentansprüche

1. Fahrzeugkarosserieteil, insbesondere Motorhaube, Kotflügel oder Schürze im Frontbereich eines Fahrzeuges, **dadurch gekennzeichnet, dass** es zur Vermeidung von schweren Verletzungen eines vom Fahrzeug erfassten Fußgängers (7) aus einer Matte (5) aus einzelnen zusammenhängenden, weichverformbaren Elementen (3) besteht, die zur Bildung einer stabilen Einheit einen Verbund bilden, wobei die Verbindung der einzelnen Elemente (3) Sollbruchstellen (6) sind, die bei einer stoßartigen Belastung brechen, mit der Folge, dass der Verbund aufgelöst ist.

2. Fahrzeugkarosserieteil nach Anspruch 1, **dadurch gekennzeichnet, dass** die weichverformbaren Elemente (3) unter Belastung zusammendrückbare Hohlkörper sind.

3. Fahrzeugkarosserieteil nach Anspruch 2, **dadurch gekennzeichnet, dass** die Hohlkörper einen runden, quadratischen oder wabenförmigen Querschnitt aufweisen.

4. Fahrzeugkarosserieteil nach Anspruch 1, **dadurch gekennzeichnet, dass** die weichverformbaren Elemente (3) aus einem Sintermaterial bestehen.

5. Fahrzeugkarosserieteil nach einem der vorhergehenden Ansprüche, **dadurch gekennzeichnet, dass** die Matte (5) zumindest einseitig von einer Kaschierung zusammengehalten ist.

6. Fahrzeugkarosserieteil nach Anspruch 5, **dadurch gekennzeichnet, dass** die Sollbruchstellen (6) in Linien in der Mattenebene verlaufen.

7. Fahrzeugkarosserieteil nach Anspruch 6, **dadurch gekennzeichnet, dass** die Sollbruchstellen (6) in senkrecht zu einander verlaufenden Linien gebildet sind.

8. Fahrzeugkarosserieteil nach einem der vorhergehenden Ansprüche, **dadurch gekennzeichnet, dass** es eine Motorhaube (2) ist, die über Stellmittel mit dem Fahrzeug verbunden ist, wobei die Stellmittel die Motorhaube beim oder vor dem Aufprall eines Fußgängers (7) keilförmig aufstellen.

9. Fahrzeugkarosserieteil nach einem der vorhergehenden Ansprüche, **dadurch gekennzeichnet, dass** die das Fahrzeugkarosserieteil bildende Matte (5) eine konkave Form aufweist, die durch eine Befestigung an einem Untergestell (9) gegen die inneren Spannkräfte in eine ebene Form gebracht ist, wobei die Befestigungen an dem Untergestell (9) Sollbruchstellen sind.

10. Fahrzeugkarosserieteil nach einem der vorhergehenden Ansprüche, **dadurch gekennzeichnet, dass** das Untergestell ebenfalls eine Matte aus zusammenhängenden, weichverformbaren Elementen (3) ist.

11. Fahrzeugkarosserieteil nach Anspruch 8 oder 9, **dadurch gekennzeichnet, dass** die Matte (5) eine ringförmige bzw. keilförmige Form hat, deren tiefste Stelle in etwa in der Längsebene des Fahrzeuges (1) verläuft, wenn sie dort angebracht ist.

## Claims

1. A vehicle body component, especially a bonnet, mudguard or skirt in the front area of a motor vehicle, **characterized in that** it consists of a mat (5) of individual connected soft-deformable elements (3) for avoiding serious injuries to a pedestrian (7) hit by the vehicle, which mats form a composite for forming a stable unit, with the connection of the individual elements (3) being determined breaking points (6) which break under an impact-like load, with the consequence that the composite is dissolved.

2. A vehicle body component according to claim 1, **characterized in that** the soft-deformable elements (3) are hollow bodies that can be compressed under load.

3. A vehicle body component according to claim 2, **characterized in that** the hollow bodies have a round, square or honeycomb-like cross section.

4. A vehicle body component according to claim 1, **characterized in that** the soft-deformable elements (3) consist of a sintered material.

5. A vehicle body component according to one of the preceding claims, **characterized in that** the mat (5) is held together at least on one side by a lamination.

6. A vehicle body component according to claim 5, **characterized in that** the determined breaking points (6) extend in lines in the plane of the mat.

7. A vehicle body component according to claim 6, **characterized in that** the predetermined breaking points (6) are formed in lines extending perpendicularly with respect to each other.

8. A vehicle body component according to one of the preceding claims, **characterized in that** it is a bonnet (2) which is connected via actuating means with the vehicle, with the actuating means lifting the bonnet in a wedge-like manner during or before the impact of a pedestrian (7).

9. A vehicle body component according to one of the preceding claims, **characterized in that** the mat (5) forming the vehicle body part has a concave form which is brought into a planar shape by fastening to a subframe (9) against the inner tensional forces, with the fastenings to the subframe (9) being determined breaking points.

10. A vehicle body component according to one of the preceding claims, **characterized in that** the subframe is also a mat made of connected soft-deformable elements (3).

11. A vehicle body component according to claim 8 or 9, **characterized in that** the mat (5) has an annular or wedge-like shape whose lowest point extends approximately in the longitudinal plane of the vehicle (1) when it is attached there.

## Revendications

1. Pièce de carrosserie de véhicule, en particulier capot moteur, aile ou jupe sur l'avant d'un véhicule à moteur, **caractérisée en ce qu'**afin d'éviter les blessures graves d'un piéton (7) fauché par le véhicule, elle se compose d'un tapis (5) d'éléments ductiles déformables (3) discrets reliés entre eux, qui forment un assemblage pour constituer une unité stable, l'assemblage des différents éléments (3) étant formé de points de rupture (6) qui se rompent en cas de contrainte de choc, avec pour conséquence que l'assemblage se défait.

2. Pièce de carrosserie de véhicule selon la revendication 1, **caractérisée en ce que** les éléments ductiles déformables (3) sont des blocs creux compressibles en cas de contrainte.

3. Pièce de carrosserie de véhicule selon la revendication 2, **caractérisée en ce que** les blocs creux ont une section ronde, carrée ou en nid d'abeilles.

4. Pièce de carrosserie de véhicule selon la revendication 1, **caractérisée en ce que** les éléments ductiles déformables (3) sont composés d'un matériau fritté.

5. Pièce de carrosserie de véhicule selon l'une des revendications précédentes, **caractérisée en ce que** le tapis (5) est maintenu assemblé par un contrecollage au moins sur un côté.

6. Pièce de carrosserie de véhicule selon la revendication 5, **caractérisée en ce que** les points de rupture (6) suivent des lignes dans le plan du tapis.

7. Pièce de carrosserie de véhicule selon la revendication 6, **caractérisée en ce que** les points de rupture (6) sont formés sur des lignes perpendiculaires les unes aux autres.

8. Pièce de carrosserie de véhicule selon l'une des revendications précédentes, **caractérisée en ce qu'**il s'agit d'un capot moteur (2) qui est relié au véhicule par des moyens de réglage, lesquels moyens de réglage redressent le capot moteur à l'oblique lors de l'impact d'un piéton (7) ou avant.

9. Pièce de carrosserie de véhicule selon l'une des revendications précédentes, **caractérisée en ce que** le tapis (5) formant la pièce de carrosserie a une forme concave qui est amenée à une forme plane contre sa force de tension interne par une fixation sur un bas de caisse (9), les fixations sur le bas de caisse (9) étant des points de rupture.

10. Pièce de carrosserie de véhicule selon l'une des revendications précédentes, **caractérisée en ce que** le bas de caisse est également un tapis d'éléments ductiles déformables (3) reliés les uns aux autres.

11. Pièce de carrosserie de véhicule selon la revendication 8 ou 9, **caractérisée en ce que** le tapis (5) a une forme annulaire ou en coin dont le point le plus bas se trouve approximativement dans le plan longitudinal du véhicule (1) quand il est posé sur celui-ci.
